# EUROPÄISCHE PATENTANMELDUNG

(11) **EP 3 480 541 A1**
(43) Veröffentlichungstag der Anmeldung: **08.05.2019**
(21) Anmeldenummer: 18199022.7
(22) Anmeldetag: 08.10.2018
(51) Int. Cl.: F25D 29/00, G01K 7/00

(54) **TEMPERATURERKENNUNGSVORRICHTUNG FÜR EIN KÜHLGERÄT, KÜHLGERÄT MIT EINER TEMPERATURERKENNUNGSVORRICHTUNG UND VERFAHREN ZUM ERKENNEN EINER TEMPERATUR FÜR EIN KÜHLGERÄT**

(30) Priorität: 06.11.2017 DE 102017125797
(71) Anmelder: Miele & Cie. KG, 33332 Gütersloh (DE)
(72) Erfinder: Wegner, Birgit, 33335 Gütersloh (DE); Ewerszumrode, Jan, 33442 Herzebrock-Clarholz (DE)

(57) **Zusammenfassung**

Der hier vorgestellte Ansatz betrifft eine Temperaturerkennungsvorrichtung (105) für ein Kühlgerät (100). Die Temperaturerkennungsvorrichtung (105) weist eine Sensoreinrichtung und eine Ausgabeeinrichtung auf. Die Sensoreinrichtung ist dazu ausgebildet, um eine Temperatur und eine Position eines in dem Kühlgerät (100) angeordneten zu kühlenden Objekts (115) zu erkennen und ein die Temperatur und die Position repräsentierendes Sensorsignal bereitzustellen. Die Ausgabeeinrichtung ist mit der Sensoreinrichtung gekoppelt und dazu ausgebildet, um unter Verwendung des Sensorsignals ein Erkennsignal auszugeben.

## Beschreibung

Der hier vorgestellte Ansatz betrifft eine Temperaturerkennungsvorrichtung für ein Kühlgerät, ein Kühlgerät mit einer Temperaturerkennungsvorrichtung und ein Verfahren zum Erkennen einer Temperatur für ein Kühlgerät.

Um eine Innenraumtemperatur in einem Kühlschrank zu regeln, ist es möglich, einzelne Lagerkammern in einem Kühlschrank unterschiedlich zu temperieren.

Die WO 2008 004748 A1 beschreibt eine solche Temperaturregelung einer Innenraumtemperatur einzelner Lagerkammern in einem Kühlschrank.

Dem hier vorgestellten Ansatz liegt die Aufgabe zugrunde, eine verbesserte Temperaturerkennungsvorrichtung für ein Kühlgerät, ein Kühlgerät mit einer verbesserten Temperaturerkennungsvorrichtung und ein verbessertes Verfahren zum Erkennen einer Temperatur für ein Kühlgerät zu schaffen.

Erfindungsgemäß wird diese Aufgabe durch eine Temperaturerkennungsvorrichtung für ein Kühlgerät, ferner ein Kühlgerät mit einer Temperaturerkennungsvorrichtung sowie ein Verfahren zum Erkennen einer Temperatur für ein Kühlgerät mit den Merkmalen bzw. Schritten der unabhängigen Ansprüche gelöst. Vorteilhafte Ausgestaltungen und Weiterbildungen des Ansatzes ergeben sich aus den jeweils nachfolgenden abhängigen Ansprüchen.

Die mit dem hier vorgestellten Ansatz erreichbaren Vorteile bestehen darin, dass mittels einer hier vorgestellten Temperaturerkennungsvorrichtung eine tatsächliche Temperatur von in einem Kühlgerät eingelagerten zu kühlenden Objekten erkannt wird. So können Getränke aus dem Kühlgerät entnommen werden, sobald sie die gewünschte Temperatur erreicht haben, ohne dass das Kühlgerät zuvor geöffnet und an den Objekten manuell erfühlt werden muss, ob eine gewünschte Temperatur bereits erreicht ist.

Eine Temperaturerkennungsvorrichtung für ein Kühlgerät weist eine Sensoreinrichtung und eine Ausgabeeinrichtung auf. Die Sensoreinrichtung ist dazu ausgebildet, um eine Temperatur und eine Position eines in dem Kühlgerät angeordneten zu kühlenden Objekts zu erkennen und ein die Temperatur und die Position repräsentierendes Sensorsignal bereitzustellen. Die Ausgabeeinrichtung ist mit der Sensoreinrichtung gekoppelt und dazu ausgebildet, um unter Verwendung des Sensorsignals ein Erkennsignal auszugeben.

Bei dem in dem Kühlgerät angeordneten zu kühlenden Objekt kann es sich um einen Behälter zum Aufbewahren von Lebensmitteln, beispielsweise um eine Flasche handeln. Hierbei kann die Sensoreinrichtung dazu ausgebildet sein, um die Temperatur und die Position beispielsweise des Flaschenbodens der Flasche zu erkennen. Bei der Temperatur kann es sich um eine aktuelle Temperatur des Objekts handeln. Die aktuelle Temperatur kann mit einer vorbestimmten Temperatur verglichen werden, die eine gewünschte Temperatur des Objekts oder eines in dem Objekt enthaltenen Lebensmittel, insbesondere eines Getränks, repräsentieren kann. Beispielsweise kann das Erkennsignal ausgegeben werden, wenn die gewünschte Temperatur erreicht ist. Zusätzlich oder alternativ kann beispielsweise fortlaufend die aktuelle Temperatur als Erkennsignal bereitgestellt werden. Dank der hier vorgestellten Temperaturerkennungsvorrichtung kann vorteilhafterweise ein häufiges Öffnen des Kühlgeräts zum Überprüfen von Objekttemperaturen der im Kühlschrank enthaltenen zu kühlenden Objekte vermieden werden.

Zum Sensieren der Temperatur kann die Sensoreinrichtung zumindest einen elektromagnetische Wellen sensierenden Sensor aufweisen. Der elektromagnetische Wellen sensierende Sensor kann ein Infrarotsensor, beispielsweise ein FLIR-Sensor, d. h., ein sogenannter "vorwärts gerichteter" Infrarotsensor, und/oder ein Wärmebildsensor und/oder eine Kameraeinrichtung, beispielsweise eine Wärmebildkameraeinrichtung, sein. Durch derartige elektromagnetische Wellen sensierende Sensoren lassen sich Temperaturen von einzelnen Objekten erkennen. Die Sensoreinrichtung kann auch eine Mehrzahl der genannten Sensoren aufweisen.

Wenn die Ausgabeeinrichtung gemäß einer Ausführungsform der Temperaturerkennungsvorrichtung dazu ausgebildet ist, um das Erkennsignal an eine Beleuchtungseinrichtung des Kühlgeräts auszugeben, wobei die Beleuchtungseinrichtung dazu ausgebildet ist, um unter Verwendung des Erkennsignals ein Beleuchten des Objekts zu bewirken, so ist beim Öffnen des Kühlgeräts das gewünscht temperierte Objekt durch eine Person sofort erkennbar und kann einfach entnommen werden. Die Temperaturerkennungsvorrichtung kann hierzu vorteilhafterweise einen Antrieb aufweisen, der ausgebildet ist, um unter Verwendung des Sensorsignals die Beleuchtungseinrichtung auf das Objekt auszurichten. Die Temperaturerkennungsvorrichtung kann zudem auch die Beleuchtungseinrichtung aufweisen, die dazu ausgebildet und/oder angeordnet ist, um das Objekt zu beleuchten.

Zusätzlich oder alternativ kann die Ausgabeeinrichtung dazu ausgebildet sein, um das Erkennsignal an eine Anzeigeeinrichtung auszugeben, die dazu ausgebildet ist, um unter Verwendung des Erkennsignals ein Markieren einer das Objekt repräsentierenden Objektanzeige in einem auf der Anzeigeeinrichtung angezeigten Kamerabild zu bewirken.

So kann vorteilhafterweise auch ohne ein Öffnen des Kühlgeräts von der Person erkannt werden, dass das Objekt und auch welches Objekt die gewünschte Temperatur aufweist.

Von Vorteil ist es hierbei, wenn die Ausgabeeinrichtung dazu ausgebildet ist, um das Erkennsignal an die extern von dem Kühlgerät angeordnete Anzeigeeinrichtung, beispielsweise an eine Anzeigeeinrichtung eines mobilen Geräts wie eines Mobiltelefons oder Smartphones, auszugeben. So können auch entfernt von dem Kühlgerät die Temperaturen der Objekte auf dem externen Gerät erkannt werden, beispielsweise in einem anderen Raum oder während einer Feier außerhalb eines Gebäudes. Hierzu kann die Ausgabeeinrichtung vorteilhafterweise dazu ausgebildet sein, um das Erkennsignal über eine drahtlose Schnittstelle an das mobile Gerät auszugeben, um das Anzeigen unter Verwendung einer Softwareanwendung, beispielsweise einer Handy-App, in der Anzeigeeinrichtung zu bewirken.

Ein Kühlgerät weist eine Temperaturerkennungsvorrichtung auf, die in einer hier vorgestellten Ausführungsform ausgeführt ist. Bei dem Kühlgerät kann es sich um einen Kühlschrank oder um einen Gefrierschrank handeln. Die Temperaturerkennungsvorrichtung kann dabei als Ergänzung für ein bekanntes Kühlgerät verwendet werden.

Ein Verfahren zum Erkennen einer Temperatur für ein Kühlgerät weist zumindest die folgenden Schritte auf:
Erkennen einer Temperatur und einer Position eines in dem Kühlgerät angeordneten zu kühlenden Objekts;

Bereitstellen eines die Temperatur und die Position repräsentierenden Sensorsignals; und Ausgeben eines Erkennsignals unter Verwendung des Sensorsignals.

Dieses Verfahren kann unter Verwendung der zuvor vorgestellten
Temperaturerkennungsvorrichtung ausführbar und/oder ansteuerbar sein. Auch durch ein solches Verfahren können die bereits beschriebenen Vorteile der
Temperaturerkennungsvorrichtung technisch einfach und kostengünstig realisiert werden.

Ausführungsbeispiele des Ansatzes sind in den Zeichnungen rein schematisch dargestellt und werden nachfolgend näher beschrieben. Es zeigen
- Figur 1: eine schematische Darstellung eines Kühlgeräts mit einer Temperaturerkennungsvorrichtung gemäß einem Ausführungsbeispiel;
- Figur 2 bis 3: eine schematische Darstellung einer Anzeigeeinrichtung gemäß einem Ausführungsbeispiel; und
- Figur 4: ein Ablaufdiagramm eines Verfahrens zum Erkennen einer Temperatur für ein Kühlgerät gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

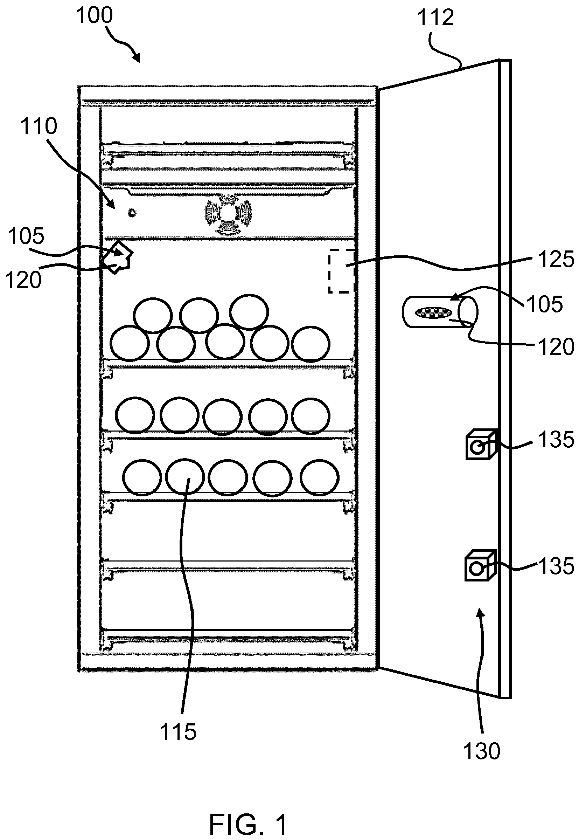

Figur 1 zeigt eine schematische Darstellung eines Kühlgeräts 100 mit einer Temperaturerkennungsvorrichtung 105 gemäß einem Ausführungsbeispiel.

Die Temperaturerkennungsvorrichtung 105 ist gemäß diesem Ausführungsbeispiel in einem Kühlraum 110 des Kühlgeräts 100 aufgenommen, der gemäß diesem Ausführungsbeispiel als ein Kühlschrank ausgeformt ist. Gemäß diesem Ausführungsbeispiel sind außerdem eine Mehrzahl von zu kühlenden Objekten 115 in dem Kühlraum 110 des Kühlgeräts 100 aufgenommen. Die Objekte 115 sind gemäß diesem Ausführungsbeispiel als Flaschen ausgeformt. Beispielhaft ist das Kühlgerät 100 als ein Kühlschrank ausgeführt.

Die Temperaturerkennungsvorrichtung 105 weist eine Sensoreinrichtung 120 und eine Ausgabeeinrichtung auf. Die Sensoreinrichtung 120 ist dazu ausgebildet, um eine Temperatur und eine Position eines in dem Kühlgerät 100 angeordneten zu kühlenden Objekts 115 zu erkennen und ein die Temperatur und die Position repräsentierendes Sensorsignal bereitzustellen. Die Ausgabeeinrichtung ist mit der Sensoreinrichtung 120 gekoppelt und dazu ausgebildet, um unter Verwendung des Sensorsignals ein Erkennsignal auszugeben.

Im Folgenden beschriebene Merkmale der Temperaturerkennungsvorrichtung 105 sind optional:
Gemäß diesem Ausführungsbeispiel weist die Sensoreinrichtung 120 zumindest einen elektromagnetische Wellen sensierenden Sensor auf. Dabei kann es sich beispielsweise um einen Infrarotsensor handeln. Die Sensoreinrichtung 120 ist ausgebildet, um eine aktuelle Temperatur zumindest eines der Objekte 115 zu sensieren. Zusätzlich ist die Sensoreinrichtung 120 gemäß einem Ausführungsbeispiel ausgebildet, um eine Positionsinformation bezüglich der Position des zumindest einen der Objekte 115, dessen Temperatur sensiert wurde, bereitzustellen. Die Positionsinformation kann dabei vorbestimmt sein oder von der Sensoreinrichtung 120 sensiert werden. Die
Temperaturerkennungseinrichtung 105 bzw. die Sensoreinrichtung 120 kann dazu einen oder mehrere Sensoren umfassen, um sowohl die Temperatur als auch die Position erfassen zu können. In dem in Fig. 1 gezeigten Beispiel ist die Temperaturerkennungseinrichtung 105 mit der Sensoreinrichtung 120 an der Innenseite der Tür 112 angebracht, und zwar so, dass eine Temperaturerfassung möglichst aller im Innenraum 110 befindlichen Gegenstände 115 erfolgen kann. Alternativ oder in Kombination kann die Temperaturerkennungseinrichtung 105 mit der Sensoreinrichtung 120 im Innenraum 110, bevorzugt im oberen Drittel des Innenraumes 110, angebracht sein.

Die Ausgabeeinrichtung ist gemäß diesem Ausführungsbeispiel dazu ausgebildet, um das Erkennsignal an eine Beleuchtungseinrichtung 125 des Kühlgeräts 100 auszugeben, wobei die Beleuchtungseinrichtung 125 dazu ausgebildet ist, um unter Verwendung des Erkennsignals ein Beleuchten des Objekts 115 zu bewirken.

Die Temperaturerkennungsvorrichtung 105 weist zudem gemäß diesem Ausführungsbeispiel einen Antrieb auf, der ausgebildet ist, um unter Verwendung des Sensorsignals die Beleuchtungseinrichtung 125 auf das Objekt 115 auszurichten.

Gemäß diesem Ausführungsbeispiel ist die Beleuchtungseinrichtung 125 Teil der vorgestellten Temperaturerkennungsvorrichtung 105 und dazu ausgebildet und/oder angeordnet, um das Objekt 115 zu beleuchten.

Die Ausgabeeinrichtung ist gemäß diesem Ausführungsbeispiel dazu ausgebildet, um das Erkennsignal an eine Anzeigeeinrichtung auszugeben, die dazu ausgebildet ist, um unter Verwendung des Erkennsignals ein Markieren einer das Objekt 115 repräsentierenden Objektanzeige in einem auf der Anzeigeeinrichtung angezeigten Kamerabild zu bewirken.

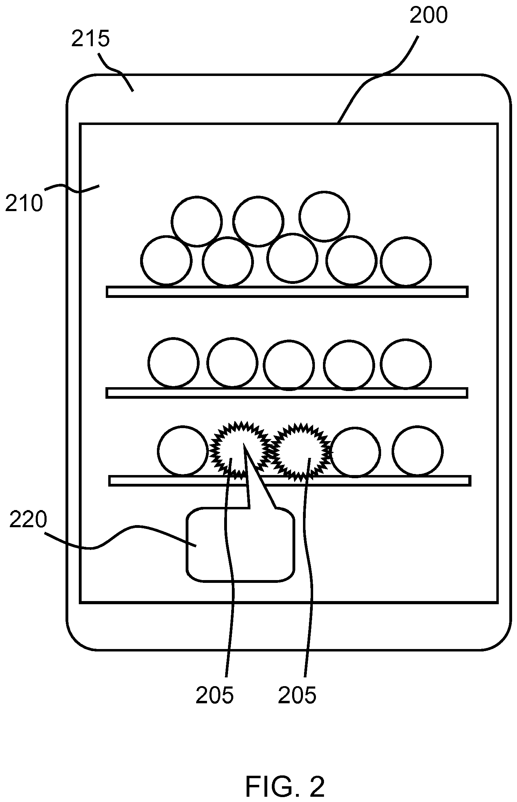

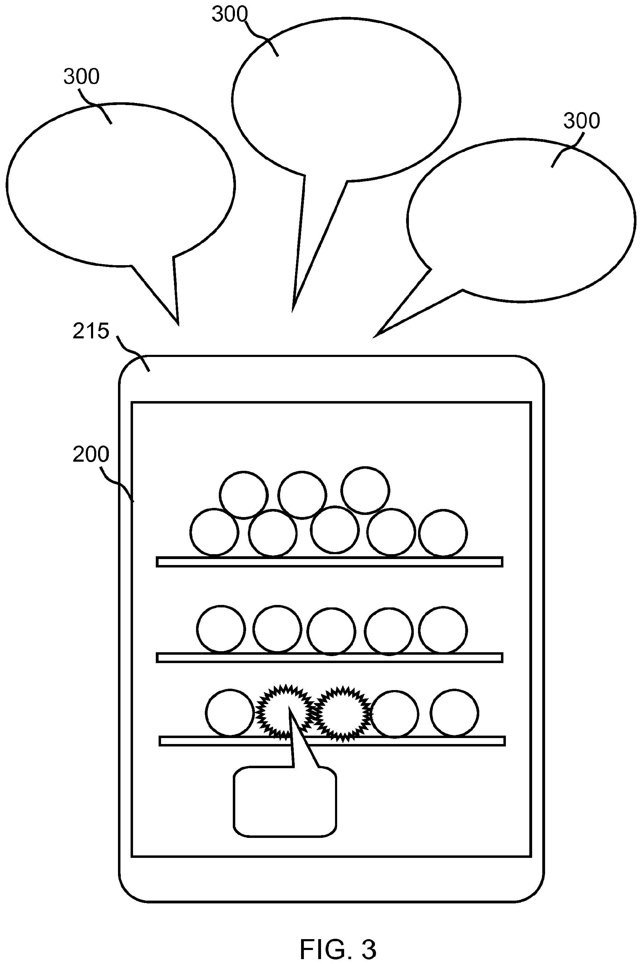

Zum Bereitstellen des Kamerabilds weist das Kühlgerät 100, oder gemäß einem alternativen Ausführungsbeispiel die Temperaturerkennungsvorrichtung 105, eine Kameraeinrichtung 130, hier beispielhaft mit zwei Kameramodulen 135, auf, die dazu ausgebildet und angeordnet sind, um den Kühlraum 110 optisch zu erfassen. Die Anzeigeeinrichtung mit dem entsprechenden Kamerabild ist in den Figuren 2 und 3 gezeigt. Gemäß einem Ausführungsbeispiel ist die Kameraeinrichtung 130 als Teil der Sensoreinrichtung 120 ausgeführt und wird beispielsweise verwendet, um die Position eines Objekts 120 zu sensieren, dessen Temperatur sensiert wurde.

Die Ausgabeeinrichtung ist dazu ausgebildet, das Erkennsignal über eine drahtgebundene oder drahtlose Schmittstelle unter Verwendung einer Softwareanwendung an ein mobiles Gerät 215 mit einer Anzeigeeinrichtung 200 auszugeben, welches sich separat bzw. extern vom Kühlgerät 100 befindet.

Im Folgenden werden Ausführungsbeispiele anhand der Figur 1 nochmals mit anderen Worten beschrieben:
Anders als bei einer bekannten Temperaturregelung, bei der eine Innenraumtemperatur einzelner Lagerkammern in einem Kühlschrank geregelt wird, wird bei der hier vorgestellten Temperaturerkennungsvorrichtung 105 die tatsächliche Temperatur der eingelagerten Gegenstände in Form der Objekte 115 erfasst.

Die hier vorgestellte Temperaturerkennungsvorrichtung 105 ist demnach dazu ausgebildet, um die Temperatur im Innenraum des Kühlgeräts 100 zu messen und ein Anzeigen und Melden der perfekt gekühlten Waren in einer App zu ermöglichen.

Bei einer Party oder auch sonst, wenn viele Objekte 115 gekühlt werden sollen und man nicht ein zuletzt eingestelltes und noch nicht gekühltes Getränk oder eine Speise entnehmen möchte, gibt es dank der Temperaturerkennungsvorrichtung 105 nun die Möglichkeit, ohne ein Öffnen der Kühlschranktür und ein manuelles Fühlen festzustellen, welche Ware schon hinreichend gekühlt ist.

Würde ein Innenraum des Kühlgeräts 100 lediglich fotografiert und das Foto abgerufen, so wäre eine Temperatur der Objekte 115 in dem Kühlgerät 100 anhand des Fotos nicht eindeutig erkennbar. Vorteilhafterweise liefert die Temperaturerkennungsvorrichtung 105 eine Information über eine reale Temperatur von Objekten 115, beispielsweise von Produkten im Kühlschrank. Eine Person weiß nun, ohne die Kühlschranktür zu öffnen, welche Temperatur die Produkte haben.

Die Sensoreinrichtung 120 der Temperaturerkennungsvorrichtung 105 umfasst gemäß diesem Ausführungsbeispiel einen Infrarotsensor und/oder einen FLIR-Sensor und/oder zumindest ein Kameramodul 135. Ferner kann die Sensoreinrichtung 120 eine geeignete Software zum Auswerten der Temperatur und Position zumindest eines der Objekte 115 umfassen.

Im Folgenden werden bereits beschriebene Details der Temperaturerkennungsvorrichtung 105 nochmals mit anderen Worten beschrieben:
Das hier gezeigte Kühlgerät 100 kann auch als ein Smart-Kühlschrank zum Messen einer Flaschentemperatur über Wärmebildsensor und zum Anzeigen der gekühlten Flasche durch einen Spot bezeichnet werden.

Alternativ zu den hier beispielhaft gezeigten Flaschen ist eine generelle Erweiterung für eine Erfassung der Temperatur aller Lebensmittel durch die Temperaturerkennungsvorrichtung 105 möglich. Durch die Temperaturerkennungsvorrichtung 105 wird die gewünschte Temperatur der Objekte 115 erkannt und mittels der Ausgabeeinrichtung unter Verwendung einer entsprechenden Software wird über die Anzeigeeinrichtung 200 des mobilen Gerätes 215 signalisiert, welcher Gegenstand bzw. Flasche 115 perfekt gekühlt zur Entnahme bereit ist.

Ein Merkmal des hier gezeigten intelligenten Kühlgeräts ist die Anzeige der perfekt gekühlten Objekte 115 in Form von Flaschen bei Partys. Gerade während einer Party werden ständig Flaschen nachgelegt und entnommen. Damit nicht die zuletzt eingelegte Flasche als Erstes in ungekühltem Zustand entnommen wird, wird gemäß diesem Ausführungsbeispiel die Temperatur der Flaschenböden der Flaschen gemessen und die perfekt gekühlte Flasche angezeigt.

Gemäß einem Ausführungsbeispiel misst ein Wärmebildsensor und/oder eine Wärmebildkamera der Sensoreinrichtung 120 Temperaturen der Flaschen und über einen zusätzlichen Spot oder eine Ansteuerung der im Kühlgerät 100 vorhandenen Leuchten der Beleuchtungseinrichtung 125, wird dem Nutzer gezeigt, welche Flasche schon Trinktemperatur erreicht hat.

Für dieses Feature wird gemäß diesem Ausführungsbeispiel eine Kamera mit IR-Temperaturmessung und eine über Wellen- und/oder Zahnräder und einen Schrittmotor steuerbare LED-Lampe der Beleuchtungseinrichtung 125 für die Ausleuchtung verwendet.

Figur 2 zeigt eine schematische Darstellung einer Anzeigeeinrichtung 200 gemäß einem Ausführungsbeispiel. Dabei kann es sich um die in Fig. 1 beschriebene Anzeigeeinrichtung 200 handeln, die dazu ausgebildet ist, um das von der in Fig. 1 beschriebenen Temperaturerkennungsvorrichtung ausgegebene Erkennsignal einzulesen. Unter Verwendung des Erkennsignals bewirkt die Anzeigeeinrichtung 200 ein Markieren einer das Objekt repräsentierenden Objektanzeige 205 in einem angezeigten Kamerabild 210.

Die Anzeigeeinrichtung 200 ist gemäß diesem Ausführungsbeispiel extern von dem Kühlgerät angeordnet und als eine Anzeigeeinrichtung 200 eines mobilen Geräts 215 ausgeformt.

Die Ausgabeeinrichtung der Temperaturerkennungsvorrichtung ist dazu eingerichtet, das Erkennsignal über eine drahtlose Schnittstelle an das mobile Gerät 215 auszugeben, wobei das Anzeigen gemäß diesem Ausführungsbeispiel unter Verwendung einer Softwareanwendung in der Anzeigeeinrichtung 200 bewirkt wird.

Im Folgenden werden Ausführungsbeispiele anhand der Figur 2 nochmals mit anderen Worten beschrieben:
Gemäß diesem Ausführungsbeispiel wird einem Nutzer über ein Foto in einer App signalisiert, dass die Getränketemperatur erreicht wurde oder er warten muss, bis er richtig gekühlte Getränke entnehmen kann. So braucht der Kühlschrank nicht unnötig geöffnet werden. Die richtig gekühlte Flasche wird dem Nutzer in der App-Anzeige als Markierung der Objektanzeige 205 gekennzeichnet, hier in Form einer gezackten Umrandung der Objektanzeige 205. Hierfür wird beispielsweise die in Fig. 1 beschriebene Kameraeinrichtung im Kühlgerät genutzt, die beispielsweise bei einem Schließen der Kühlschranktür ein Foto macht.

Gemäß einem Ausführungsbeispiel erfolgt eine Messung der Temperatur an verschiedenen Punkten im Kühlgerät über eine Wärmebildkamera und/oder Infrarotsensoren, z. B. FLIR. Eine Auswertung dieser Messergebnisse durch die Temperaturerkennungsvorrichtung wird mittels einer Software mit dem Kamerabild 210 verknüpft und über die App angezeigt.

Zusätzlich zu dem Markieren der Objektanzeige 205 zeigt die Anzeigeeinrichtung 200 im Bereich der Objektanzeige 205 gemäß diesem Ausführungsbeispiel ein Symbol 220 an, hier eine Sprechblase, in der gemäß einem alternativen Ausführungsbeispiel ein Informationstext angezeigt wird, beispielsweise: "Dein Bier ist nun gekühlt."

Figur 3 zeigt eine schematische Darstellung einer Anzeigeeinrichtung 200 gemäß einem Ausführungsbeispiel. Dabei kann es sich um die in Fig. 2 beschriebene Anzeigeeinrichtung 200 handeln.

Zusätzlich zu der Anzeige der gekühlten Flasche gibt die App gemäß diesem Ausführungsbeispiel auch zumindest ein akustisches Signal 300 und/oder eine Information über eine Sprachausgabe des Geräts 215 aus, sobald die gewünschte Temperatur erreicht ist.

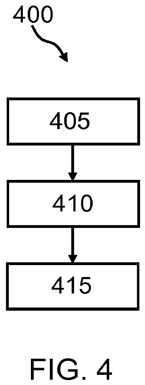

Figur 4 zeigt ein Ablaufdiagramm eines Verfahrens 400 zum Erkennen einer Temperatur für ein Kühlgerät gemäß einem Ausführungsbeispiel.

Dabei kann es sich um ein Verfahren 400 handeln, das von der in Fig. 1 beschriebenen Temperaturerkennungsvorrichtung ansteuerbar oder ausführbar ist.

Das Verfahren 400 weist zumindest einen Schritt 405 des Erkennens, einen Schritt 410 des Bereitstellens und einen Schritt 415 des Ausgebens auf.

Im Schritt 405 des Erkennens werden eine Temperatur und eine Position eines in dem Kühlgerät angeordneten zu kühlenden Objekts erkannt. Im Schritt 410 des Bereitstellens wird ein die Temperatur und die Position repräsentierendes Sensorsignal bereitgestellt. Im Schritt 415 des Ausgebens wird ein Erkennsignal unter Verwendung des Sensorsignals ausgegeben.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Temperaturerkennungsvorrichtung (105) für ein Kühlgerät (100), wobei die Temperaturerkennungsvorrichtung (105) zumindest die folgenden Merkmale aufweist:
eine Sensoreinrichtung, die dazu ausgebildet ist, um eine Temperatur und eine Position eines in dem Kühlgerät (100) angeordneten zu kühlenden Objekts (115) zu erkennen und ein die Temperatur und die Position repräsentierendes Sensorsignal bereitzustellen; und
eine mit der Sensoreinrichtung gekoppelte Ausgabeeinrichtung, die dazu ausgebildet ist, um unter Verwendung des Sensorsignals ein Erkennsignal auszugeben.

2. Temperaturerkennungsvorrichtung (105) gemäß Anspruch 1, bei der die Sensoreinrichtung zumindest einen elektromagnetische Wellen sensierenden Sensor (120) aufweist.

3. Temperaturerkennungsvorrichtung (105) gemäß einem der vorangegangenen Ansprüche, bei der die Ausgabeeinrichtung dazu ausgebildet ist, um das Erkennsignal an eine Beleuchtungseinrichtung (125) des Kühlgeräts (100) auszugeben, wobei die Beleuchtungseinrichtung (125) dazu ausgebildet ist, um unter Verwendung des Erkennsignals ein Beleuchten des Objekts (115) zu bewirken.

4. Temperaturerkennungsvorrichtung (105) gemäß Anspruch 3, mit einem Antrieb, der ausgebildet ist, um unter Verwendung des Sensorsignals die Beleuchtungseinrichtung (125) auf das Objekt (115) auszurichten.

5. Temperaturerkennungsvorrichtung (105) gemäß einem der Ansprüche 3 oder 4, mit der Beleuchtungseinrichtung (125), die dazu ausgebildet und/oder angeordnet ist, um das Objekt (115) zu beleuchten.

6. Temperaturerkennungsvorrichtung (105) gemäß einem der der vorangegangenen Ansprüche, bei der die Ausgabeeinrichtung dazu ausgebildet ist, um das Erkennsignal an eine Anzeigeeinrichtung (200) auszugeben, die dazu ausgebildet ist, um unter Verwendung des Erkennsignals ein Markieren einer das Objekt (115) repräsentierenden Objektanzeige (205) in einem auf der Anzeigeeinrichtung (200) angezeigten Kamerabild (210) zu bewirken.

7. Temperaturerkennungsvorrichtung (105) gemäß Anspruch 6, bei der die Ausgabeeinrichtung dazu ausgebildet ist, um das Erkennsignal an die extern von dem Kühlgerät (100) angeordnete Anzeigeeinrichtung (200) auszugeben.

8. Temperaturerkennungsvorrichtung (105) gemäß einem der Ansprüche 6 bis 7, bei der die Ausgabeeinrichtung dazu ausgebildet ist, um das Erkennsignal über eine drahtlose Schnittstelle an ein mobiles Gerät (215) auszugeben, um das Anzeigen unter Verwendung einer Softwareanwendung in der Anzeigeeinrichtung (200) zu bewirken.

9. Kühlgerät (100) mit einer Temperaturerkennungsvorrichtung (105) gemäß einem der vorangegangenen Ansprüche.

10. Verfahren (400) zum Erkennen einer Temperatur für ein Kühlgerät (100), wobei das Verfahren (400) zumindest die folgenden Schritte umfasst:
Erkennen (405) einer Temperatur und einer Position eines in dem Kühlgerät (100) angeordneten zu kühlenden Objekts (115);
Bereitstellen (410) eines die Temperatur und die Position repräsentierenden Sensorsignals; und
Ausgeben (415) eines Erkennsignals unter Verwendung des Sensorsignals.
